# EUROPÄISCHE PATENTANMELDUNG

(11) **EP 4 764 305 A1**
(43) Veröffentlichungstag der Anmeldung: **24.06.2026**
(21) Anmeldenummer: 25222448.0
(22) Anmeldetag: 11.12.2025
(51) Int. Cl.: F21V 17/16, F21V 19/00, F16B 2/22

(54) **BEFESTIGUNGSCLIP FÜR EINE LEUCHTE UND DAMIT AUSGESTATTETE LEUCHTE**

(30) Priorität: 19.12.2024 DE 202024107417 U
(71) Anmelder: Thorn Lighting Limited, London W1U 7EU (GB); ZG Lighting SRB d. o. o., 18000 Nis (Palilula) (RS)
(72) Erfinder: Goodfellow, Anthony, 6851 Dornbirn (AT); Cook, David, 6851 Dornbirn (AT); Petrovic, Aleksandar, 6851 Dornbirn (AT); Stankovic Marinkovic, Danica, 6851 Dornbirn (AT); Spence, Andrew, 6851 Dornbirn (AT)
(74) Vertreter: Kiwit, Benedikt

(57) **Zusammenfassung**

Die vorliegende Erfindung betrifft einen Befestigungsclip (1) für eine Leuchte (100), aufweisend: einen Basissteg (2) mit einer Montageseite (20), und ein Paar von Schnapphaken (3), welche sich jeweils mit einem Stegabschnitt (30) von der Montageseite (20) weg erstrecken, wobei jeder der Stegabschnitte (30) von der Montageseite (20) beabstandet einen Rastvorsprung (31) aufweist, wobei die Rastvorsprünge (31) aufeinander zu gerichtet und jeweils durch eine der Montageseite (20) zugewandte Rastseite (32) gebildet sind, um zwischen den Rastseiten (32) einerseits und der Montageseite (20) andererseits einen Montageraum (M) beidseits zu begrenzen, wobei der Befestigungsclip (1) ferner einen Auflageabschnitt (4) aufweist, welcher in dem Montageraum (M) angeordnet ist, wobei der Auflageabschnitt (4) eine Auflageseite (40) aufweist, welche von der Montageseite (20) abgewandt ist, um zwischen der Auflageseite (40) und den Rastseiten (32) einen Aufnahmeraum (A) zur rastenden Aufnahme einer Leuchtengruppe (L) zu begrenzen, wobei der Auflageabschnitt (4) einen Federabschnitt (7) aufweist, der wenigstens einen Teil (470) der Auflageseite (40) aufweist, wobei der Federabschnitt (7) derart ausgebildet ist, so dass er zwischen einer Ruheposition, in der der Federabschnitt (7) entspannt in dem Montageraum (M) angeordnet ist, sowie einer Vorspannposition, in der der Federabschnitt (7) wenigstens mit dem Teil (470) der Auflageseite (40) gegenüber der Ruheposition zu der Montageseite (20) hin derart versetzt ist, so dass der Federabschnitt (7) mit einer Federkraft (F) von der Montageseite (20) weg und zu den Rastseiten (32) hin vorgespannt ist.

## Beschreibung

Leuchten, wie bspw. längliche Leuchten zur Bereitstellung einer Lichtleiste, sind aus dem Stand der Technik bekannt. Leuchten weisen ein Leuchtmittel auf. Oft wird eine Optik bereitgestellt, um die Lichtabgabe des Leuchtmittels optisch zu beeinflussen. Das Leuchtmittel sowie die optionale Optik sind in der Regel mittels eigener Befestigungsmittel bspw. an einem Leuchtenkörper der Leuchte befestigt; dies oft mittels Werkzeugen. Des Weiteren können an dem Leuchtenkörper weitere Leuchtenkomponenten, wie bspw. Leuchtenelektronik-Bauteile (bspw. LED-Treiber), befestigt oder in diesem anderweitig aufgenommen sein. Die Verkabelung der Leuchte verläuft in der Regel innerhalb des Leuchtengehäuses bzw. Leuchtenkörpers.

Aus dem Stand der Technik sind Befestigungsclips bekannt, mittels denen insbesondere längliche Leuchtmittel durch Einrasten an gegenüberliegenden Längsseiten dieser Leuchtmittel in oder an dem Leuchtenkörper verrastet werden. Je nach Dicke des Leuchtmittels oder des Leuchtenträgers und auch aufgrund variierender Betriebstemperaturen kann ein definiertes Festlegen des Leuchtmittels mitunter nicht ausreichend sicher ermöglicht werden. Dies birgt die Gefahr, dass ein entsprechendes Leuchtmittel bspw. seitlich aus der Verrastung herausgleitet. Da die beschriebenen Befestigungsclips mitunter auch zum Aneinanderhalten des Leuchtmittels an den Leuchtenträger dienen, um eine ausreichende Wärmeabfuhr von dem Leuchtmittel über den Leuchtenträger zu gewährleisten, so wird bei mangelnder oder nicht konstanter Rastverbindung auch eine solche Wärmeabfuhr beeinträchtigt. Dies wiederum kann zu einer Überhitzung führen und somit die Betriebsdauer einer so ausgestatteten Leuchte beeinträchtigen.

Es ist somit eine Aufgabe der vorliegenden Erfindung, ein Befestigungsmittel bzw. einen Befestigungsclip sowie eine damit ausgestattete Leuchte bereitzustellen, mittels denen eine ausreichende Sicherung des Leuchtmittels sowie bevorzugt auch eine ausreichende Anlage zwischen Leuchtmittel und Leuchtenträger - bspw. zur ausreichenden Wärmeabfuhr - in einfacher Weise sichergestellt werden kann.

Diese Aufgabe wird durch den Gegenstand der unabhängigen Ansprüche gelöst. Die abhängigen Ansprüche bilden den zentralen Gedanken der vorliegenden Erfindung in besonders vorteilhafter Weise weiter.

Gemäß einem ersten Aspekt betrifft die vorliegende Erfindung einen Befestigungsclip für eine Leuchte. Der Befestigungsclip weist einen Basissteg mit einer Montageseite auf. Ferner weist der Befestigungsclip ein Paar von Schnapphaken auf, welche sich jeweils mit einem Stegabschnitt von der Montageseite weg erstrecken. Jeder der Stegabschnitte weist von der Montageseite beabstandet einen Rastvorsprung auf. Die Rastvorsprünge sind aufeinander zu gerichtet und jeweils durch eine der Montageseite zugewandte Rastseite gebildet, um zwischen den Rastseiten einerseits und der Montageseite andererseits einen Montageraum beidseits zu begrenzen. Der Befestigungsclip weist ferner einen Auflageabschnitt auf, welcher (wenigstens teilweise, bevorzugt größtenteils oder vollständig) in dem Montageraum angeordnet ist. Der Auflageabschnitt wiederum weist eine Auflageseite auf, welche von der Montageseite abgewandt ist, um zwischen der Auflageseite und den Rastseiten einen Aufnahmeraum zur rastenden Aufnahme einer Leuchtengruppe zu begrenzen. Die Leuchtengruppe kann dabei bevorzugt ein (bspw. längliches) Leuchtmittel, wie ein (bspw. längliches) LED-Modul, und einen das Leuchtmittel tragenden Tragteil eines (bspw. länglichen) Leuchtenträgers aufweisen. Der Auflageabschnitt weist einen Federabschnitt auf, der wenigstens einen Teil der Auflageseite aufweist. Der Federabschnitt ist derart ausgebildet, sodass er zwischen einer Ruheposition, in der der Federabschnitt entspannt in dem Montageraum angeordnet ist, sowie einer Vorspannposition(im Folgenden auch als "Betriebsposition" bezeichnet), in der der Federabschnitt wenigstens mit dem Teil der Auflageseite gegenüber der Ruheposition zu der Montageseite hin derart versetzt ist, sodass der Federabschnitt mit einer Federkraft von der Montageseite weg und zu der Rastseite hin vorgespannt ist.

Mittels dem erfindungsgemäßen Befestigungsclip wird somit eine federnd gelagerte Auflage für die Leuchtengruppe in dem Montageraum bereitgestellt. Liegt somit die Leuchtengruppe auf der Auflageseite auf und bringt diese somit in Betriebsposition, so wird die so angeordnete und mittels der Schnapphaken eingerastete Leuchtengruppe dauerhaft gegenüber den Rastseiten in Anlage gehalten. Aufgrund der aufrechterhaltenen Federkraft werden somit auch die Komponenten der Leuchtengruppe, nämlich bspw. das Leuchtmittel und das Tragteil, dauerhaft gegeneinandergedrückt. Diese konstante Anlage ermöglicht wiederum einen sicheren und bevorzugt flächigen Kontakt bspw. zur Wärmeabfuhr. Somit kann auch unabhängig von einer Dicke der aufzunehmenden Leuchtengruppe im Bereich des Federwegs des Federabschnitts diese Leuchtengruppe sowohl sicher in der Rastverbindung gehalten werden, als auch untereinander sicher in Anlage verbleiben. Somit kann bspw. auch auf zusätzliche Sicherungsmaßnahmen zum Sichern des Leuchtmittels bzw. der Leuchtengruppe, wie bspw. ein zusätzliches Festkleben oder Festschrauben, verzichtet werden, was wiederum die Montage vereinfacht.

Der Auflageabschnitt kann bevorzugt einen Träger aufweisen, welcher sich - bevorzugt zwischen den Stegabschnitten - von der Montageseite weg in den Montageraum hinein bis zu einem distalen Ende hin erstreckt. Somit kann eine stabile Lagerung für den Federabschnitt bereitgestellt werden.

Das distale Ende bzw. eine distale Stirnseite des distalen Endes kann bevorzugt einen Teil der Auflageseite aufweisen. Mit anderen Worten bilden das distale Ende bzw. dessen distale Stirnseite einerseits und der Federabschnitt mit seinem Teil der Auflageseite andererseits zusammen die Auflageseite. Dabei können sie bevorzugt wenigstens in der Betriebsposition in einer Ebene liegen. Somit kann eine besonders große Auflagefläche und somit Abstützung für eine aufzunehmende Leuchtengruppe bereitgestellt werden, während gleichzeitig eine ausreichende Federkraft zu den Rastseiten hin aufrechterhalten werden kann.

Der Federabschnitt kann bevorzugt auf Seiten des distalen Endes des Trägers vorgesehen sein. Somit kann der Federabschnitt bevorzugt einen ausreichenden Federweg aufweisen, um bspw. entsprechend auf unterschiedliche Typen und Dicken von Leuchtengruppen angewendet zu werden.

Der Federabschnitt kann bevorzugt zwei flügelartige Federarme aufweisen, welche jeweils wenigstens einen Teil der Auflageseite aufweisen. Somit kann der Federabschnitt besonders einfach aber wirkungsvoll bereitgestellt werden.

Die Federarme können sich bevorzugt seitlich von dem Träger voneinander weg erstrecken, dies besonders bevorzugt quer zu einer Erstreckung der Stegabschnitte. Somit können die Federarme besonders effektiv bereitgestellt werden, und eine große Auflageseite kann zur sicheren Auflage der Leuchtengruppe bereitgestellt werden.

Die Federarme können bevorzugt sich von gegenüberliegenden Seiten des Trägers jeweils ausgehend von einem proximalen Endabschnitt der Federarme voneinander weg erstrecken; dies bevorzugt bis zu einem jeweiligen distalen Endabschnitt hin. Somit können die Federarme räumlich kompakt und effektiv bereitgestellt werden, und ermöglichen einen möglichst großzügigen Federweg. Da sich die Federarme von gegenüberliegenden Seiten des Trägers weg erstrecken, kann zudem eine möglichst gleichmäßige bzw. symmetrische Auflage für eine Leuchtenbaugruppe bereitgestellt werden.

Die Federarme können bevorzugt sich zu jeweils einem anderen der aufeinander zu gerichteten Rastvorsprünge hin zu einem bzw. dem jeweiligen distalen Endabschnitt erstrecken. Somit kann bei einem vergleichsweise einfachen Aufbau des Federabschnitts ein effektives Überführen desselben in die Betriebsposition und somit Aufbringen der entsprechenden Federkraft ermöglicht werden.

Der Teil der Auflageseite der jeweiligen Federarme kann bevorzugt wenigstens teilweise zwischen dem jeweiligen proximalen Endabschnitt und dem jeweiligen distalen Endabschnitt vorgesehen sein. Somit kann die Auflageseite effektiv bereitgestellt werden, und bei Überführung von der Ruheposition in die Betriebsposition so eine sichere Auflage gegenüber einer zu tragenden Leuchtengruppe geschaffen werden.

Der distale Endabschnitt des der jeweiligen Rastseite zugewandten Federarms kann bevorzugt, wenigstens in der Ruheposition des Federabschnitts, bzgl. einer die Montageseite und die jeweilige Rastseite verbindenden Strecke, dieser Rastseite näherliegen als der proximale Endabschnitt dieses Federarms. Somit steht das distale Ende bzgl. einer Aufnahmerichtung zur Einrastung in die Rasthaken der Rastseite näher, sodass beim Einsetzen einer Leuchtengruppe diese sicher und effektiv mit den Federarmen in Kontakt kommen und die Federarme somit wirkungsvoll von der Ruheposition in die Betriebsposition des Federabschnitts überführt werden können.

Die Federarme sind bevorzugt zu ihrem jeweiligen distalen Endabschnitt hin von der Montageseite weg gebogen und/oder weg geneigt. Somit kann ein effektiv wirkender Federarm bereitgestellt werden, welcher bevorzugt bei zunehmender Dicke einer aufzunehmenden Leuchtengruppe bevorzugt seine Federkraft exponentiell erhöht und somit einen sicheren Halt und eine sichere Aufnahme einer Leuchtengruppe ermöglicht.

Der Teil der Auflageseite der jeweiligen Federarme kann bevorzugt an dem jeweiligen distalen Endabschnitt bzgl. einer die Rastvorsprünge verbindenden Ebene in der Ruheposition der Federarme um einen Winkel β von 3° ≤ β ≤ 20° zu der zugeordneten Rastseite hin geneigt sein. Dies ermöglicht eine effektive Stellung der distalen Endabschnitte zur effektiven Auflage einer Leuchtengruppe sowie eines wirkungsvollen Aufbringens der in die Betriebsposition überführten Federarme.

Die Stegabschnitte können bevorzugt von dem Montageraum weg konvex nach außen gewölbt sein. Somit tragen auch die Stegabschnitte bevorzugt zu einer effektiven und konstanten rastenden Aufnahme bei. Denn drängt der Federabschnitt einer Leuchtengruppe gegen die entsprechenden Rastseiten, so tendieren die entsprechenden gewölbten Stegabschnitte dazu, in eine gestreckte Haltung überführt zu werden, und führen so zu einer besonders effektiven Rastaufnahme.

Die Rastseiten können bevorzugt mit zunehmenden Abstand vom jeweiligen - also zugeordneten - Stegabschnitt zu der Montageseite hin geneigt sein. Somit tendieren die Rastseiten bei rastender Aufnahme einer Leuchtengruppe dazu, sich unter der Federkraft gerade auszurichten und so bevorzugt in flächige Anlage mit der Leuchtengruppe bzw. dem Leuchtmittel davon zu gelangen. Somit wird eine besonders sichere Auflage der Rastvorsprünge ermöglicht. Da diese somit in einer flächigen und besonders sicheren Anlage stehen, wird verhindert, dass die Rastvorsprünge aus der Rastverbindung heraus tendieren, wodurch ein ungewolltes Lösen der Leuchtengruppe aus der Rastverbindung verhindert werden kann.

Die Rastseiten können bevorzugt bzgl. einer die Rastvorsprünge verbindenden Ebene in einer Ruheposition der Schnapphaken um einen Winkel α von 3° ≤ α ≤ 10° zu der Montageseite hin geneigt sein. Somit kann eine besonders effektive und sichere Rastaufnahme ermöglicht werden.

Die Montageseite kann bevorzugt zwischen den Stegabschnitten mit zunehmendem Abstand von den jeweiligen Stegabschnitten aufeinander zu - und vorzugsweise bis zu dem Träger hin, wenn dieser vorhanden ist - von den Rastseiten weg geneigt und/oder gewölbt verlaufen. Somit kann ein ausreichender Raum bspw. für einen Federweg des Federabschnitts oder dessen Federarme von der Ruheposition in die Betriebsposition geschaffen werden. Auch kann so, sofern ein Träger vorhanden ist, ein ausrechender Raum für diesen bereitgestellt werden, ohne eben den vorbeschriebenen Federweg zu beeinträchtigen.

Der Befestigungsclip kann ferner bevorzugt ein zweites Paar von Schnapphaken aufweisen, welche sich jeweils mit einem weiteren Stegabschnitt von der Montageseite weg erstrecken, wobei die Stegabschnitte zwischen den weiteren Stegabschnitten angeordnet sind. Jeder der weiteren Stegabschnitte weist dann von der Montageseite beabstandet einen weiteren Rastvorsprung auf. Die weiteren Rastvorsprünge sind dabei voneinander weg gerichtet, um jeweils einen seitlich nach außen von dem Montageraum weg gerichteten weiteren Montageraum zu bilden, um gemeinsam eine den Aufnahmeraum überspannende Optik aufzunehmen. Somit kann der Befestigungsclip in kompakter und besonders einfacher Weise mehrere Bauteile einer Leuchte fixieren. Insbesondere bei Aufnahme einer entsprechenden Optik kann diese somit zu den Leuchtmitteln unmittelbar befestigt und bevorzugt auch zu diesen entsprechend ausgerichtet werden. Auch kann so die Anzahl von Befestigungsmitteln reduziert werden.

Der Befestigungsclip kann bevorzugt ferner einen Einführraum zum Einführen eines Bauteils auf einer der Montageseite abgewandten Seite des Basisstegs über eine Einführöffnung des Einführraums aufweisen. Als Bauteil ist hier bspw. ein Befestigungsmittel, wie eine Schraube oder ein Bolzen, denkbar, mittels dem zusätzliche Komponenten an dem Befestigungsclip befestigt werden können, wie bspw. elektrische/elektronische Leuchtenkomponenten. Auch ist als Bauteil bspw. eine Indikatorlampe, wie bspw. einer Indikator-LED, denkbar, sodass der Befestigungsclip bspw. gleichzeitig zur Aufnahme entsprechender Teile genutzt werden kann, was die Teileanzahl reduziert.

Der Befestigungsclip kann bevorzugt ferner wenigstens einen Kabelhaltersteg aufweisen, welcher zusammen mit dem Basissteg auf einer dem Montageraum abgewandten Seite einen Kabelaufnahmeraum zum Durchführen von Kabeln begrenzt. Somit kann der Befestigungsclip ferner als Kabelhalter genutzt werden, sodass weiter Bauteile durch Verwendung eines solchen Befestigungsclips eingespart werden können.

Der Kabelhaltersteg kann bevorzugt federnd gelagert sein, um wahlweise eine seitliche Aufnahmeöffnung zum Einlegen von Kabeln zu vergrößern. Somit kann der Kabelhaltersteg besonders einfach und intuitiv bedient werden, sodass das Einlegen entsprechender Kabel besonders vereinfacht ist.

Der Befestigungsclip kann bevorzugt integral einstückig ausgebildet sein. Somit kann der Befestigungsclip besonders einfach gehandhabt und auch hergestellt werden.

Bspw. ist der Befestigungsclip mittels Spritzgussverfahren hergestellt, sodass der Befestigungsclip in einfacher und kostengünstiger Weise hergestellt werden kann.

Der Befestigungsclip ist bevorzugt aus Kunststoff hergestellt, sodass dieser besonders kostengünstig bereitgestellt werden kann. Als bevorzugte Kunststoffmaterialien kommen bspw. folgende infrage: Polycarbonat (PC), Polymethylmethacrylat (PMMA), Polyethylenterephthalat-Glykol (PET-G), Acrylonitril-Butadien-Styrol (ABS), Polyphenylenoxid (PPO), Polyamid (PA) wie bspw. PA6 oder PA66, Polyethersulfon (PESU), oder eine Kombination derselben.

Gemäß einem weiteren Aspekt betrifft die vorliegende Erfindung ferner eine Leuchte. Die Leuchte weist dabei einen Leuchtenträger - bspw. einen länglichen Leuchtenträger - sowie ein längliches Leuchtmittel auf, wie ein längliches LED-Modul, welches an einer Trägerseite eines Tragteils des Leuchtenträgers anliegt. Des Weiteren weist die Leuchte einen Befestigungsclip gemäß der vorliegenden Erfindung auf, wie er zuvor bereits beschrieben wurde. Der Befestigungsclip ist derart vorgesehen, sodass der Tragteil und das Leuchtmittel als Leuchtengruppe wenigstens teilweise im Aufnahmeraum derart mittels des Paares von Schnapphaken rastend aufgenommen sind, sodass der Tragteil der Montageseite zugewandt ist und das Leuchtmittel den Rastseiten zugewandt ist, und sodass die Leuchtengruppe auf der Auflageseite derart aufliegt, sodass mittels der Federkraft des sich in der Betriebsposition befindlichen Federabschnitts die Leuchtengruppe gegenüber den Rastseiten in Anlage gehalten wird und das Leuchtmittel und das Tragteil so gegeneinander gedrückt werden.

Mittels des Befestigungsclips wird es somit in einfacher Weise ermöglicht, eine Leuchte bereitzustellen, bei der die Komponenten der Leuchtengruppe sicher in Rastverbindung gehalten werden, und diese zudem sicher gegeneinander gedrückt werden, um bspw. eine hohe Tragsicherheit, eine sichere Rastverbindung und ebenso bevorzugt eine hohe Wärmeabfuhr von dem Leuchtmittel auf den Leuchtenträger zu ermöglichen.

Das Paar von Schnapphaken mit seinen jeweiligen Stegabschnitten und, wenn vorhanden, vorzugsweise auch das zweite Paar von Schnapphaken mit seinen weiteren Stegabschnitten, kann bzw. können durch jeweilige Öffnungen in dem Leuchtenträger ragen. Somit kann eine besonders effektive Bereitstellung des Befestigungsclips und sichere Halterung desselben ermöglicht werden. Durch das Hindurchführen durch entsprechende Öffnungen kann auch die Position des Befestigungsclips in einfacher Weise aber effektiv definiert erzielt werden. Zudem ist der Befestigungsclip auf diese Weise definiert ausgerichtet, sodass auch die damit rastend aufgenommenen Teile der Leuchtengruppe, wie insbesondere das Leuchtmittel, definiert in der Leuchte ausgerichtet sind.

Die Leuchte weist ferner bevorzugt eine Optik auf, wobei die Optik derart ausgebildet ist, dass sie mit gegenüberlegenden Halteabschnitten jeweils mit einem anderen der beiden weiteren Rastvorsprünge derart rastend verbindbar ist, sodass die Optik das Leuchtmittel oder den Aufnahmeraum derart mit einem Optikabschnitt überspannt, um wenigstens teilweise in einem Lichtpfad des Leuchtmittels angeordnet zu sein. Somit kann in einfacher Weise auch eine weitere Komponente, nämlich hier die Optik, mittels des einen Befestigungsclips in einfacher und sicherer Weise aufgenommen werden. Die Optik ist zudem so gleichzeitig zu dem ebenfalls mit dem Befestigungsclip aufgenommenen Leuchtmittel ausgerichtet.

Der Optikabschnitt weist bevorzugt einen im Wesentlichen U-förmigem Querschnitt auf. Der Optikabschnitt ist somit im Aufbau einfach aber funktional effektiv bereitgestellt.

An den gegenüberliegenden Endabschnitten des Optikabschnitts können sich bevorzugt jeweils die Halteabschnitte aufeinander zu erstrecken. Somit kann auch die Optik in besonders einfacher Weise ausgestaltet werden, während gleichzeitig eine hocheffektive Rastverbindung über die Halteabschnitte mit dem zweiten Paar von Schnapphaken erzielt werden kann. Die Leuchte kann somit besonders kompakt aber sicher ausgebildet werden.

Der Optikabschnitt weist bevorzugt einen lichtbeeinflussenden Abschnitt auf, welcher in dem Lichtpfad des Leuchtmittels angeordnet ist. Somit kann eine entsprechende lichtbeeinflussende Funktion in einfacher und sicherer Weise ebenfalls über den Befestigungsclip bereitgestellt werden. Der lichtbeeinflussende Abschnitt kann bevorzugt eine Linse und/oder einen Diffusor aufweisen, sodass definiert Licht-lenkende bzw. Lichtstreuende Funktionen einfach, sicher und effektiv bereitgestellt werden können.

Die Leuchte weist ferner bevorzugt Leuchtenkomponenten, wie einen Leuchtentreiber, auf, welche bevorzugt mit dem Befestigungsclip verbunden sind; dies bevorzugt über ein mit dem Befestigungsclip verbundenes Befestigungsmittel mittels Formschluss. Somit kann der Befestigungsclip bevorzugt auch zur Aufnahme, Halterung oder Befestigung weiterer Leuchtenkomponenten genutzt werden, sodass die Leuchte insgesamt besonders kompakt und mit bevorzugt wenigen Bauteilen bereitgestellt werden kann.

Der Leuchtenträger kann bevorzugt alleine oder zusammen mit einem Gehäuseteil wenigstens teilweise einen Komponentenaufnahmeraum zur Aufnahme von (den) Leuchtenkomponenten begrenzen. Auf diese Weise können die Leuchtenkomponenten sicher aufgenommen werden, während sie bevorzugt von dem Befestigungsclip gehalten sind.

Weitere Vorteile und Merkmale der vorliegenden Erfindung werden nunmehr anhand von Figuren der begleitenden Zeichnungen beschrieben. Es zeigen:
- Fig. 1: eine perspektivische Draufsicht auf einen erfindungsgemäßen Befestigungsclip gemäß einem ersten Ausführungsbeispiel der vorliegenden Erfindung,
- Fig. 2: eine perspektivische Unteransicht des Befestigungsclips gemäß Fig. 1,
- Fig. 3: eine Seitenansicht des Befestigungsclips gemäß Fig. 1,
- Fig. 4: eine Seitenansicht des Befestigungsclips gemäß Fig. 3 beispielhaft mit dem Federabschnitt (hier mit dessen Federarmen) sowohl in der Ruheposition einerseits als auch in der Vorspann- bzw. Betriebsposition andererseits,
- Fig. 5: eine Seitenansicht einer erfindungsgemäßen Leuchte gemäß einem Ausführungsbeispiel der vorliegenden Erfindung mit dem erfindungsgemäßen Befestigungsclip gemäß Fig. 1 als Explosionsdarstellung vor dem Zusammenbau,
- Fig. 6: eine Detaildarstellung der Leuchte bzw. des Befestigungsclips gemäß Detail A der Fig. 5,
- Fig. 7: eine Seitenansicht der erfindungsgemäßen Leuchte gemäß Fig. 5 im zusammengebauten Zustand,
- Fig. 8: eine Detaildarstellung der Leuchte gemäß Detail B der Fig. 7,
- Fig. 9: eine Seitenansicht der erfindungsgemäßen Leuchte gemäß Fig. 7 hier beispielhaft mit dem Federabschnitt (hier mit dessen Federarmen) sowohl in Ruheposition einerseits als auch in Vorspann- bzw. Betriebsposition andererseits; vergleichbar der Fig. 4, und
- Fig. 10: eine Seitenansicht einer erfindungsgemäßen Leuchte gemäß Fig. 9 mit weiteren Komponenten der Leuchte (bspw. einem Gehäuseteil).

Die Figuren zeigen unterschiedliche Ansichten eines erfindungsgemäßen Befestigungsclips 1 sowie einer damit ausgestatteten Leuchte 100. Zunächst wird im Folgenden der Befestigungsclip 1 beschrieben.

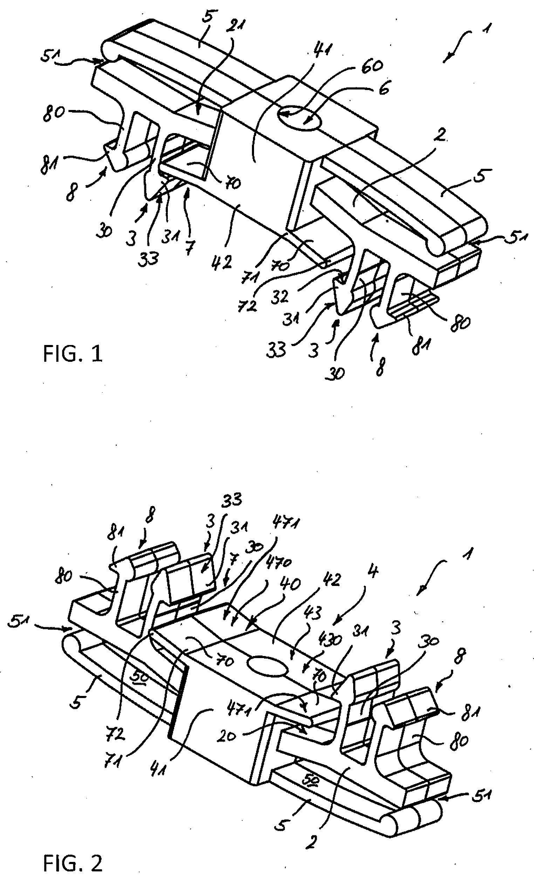

Der Befestigungsclip 1 weist einen Basissteg 2 mit einer Montageseite 20 auf. Wie bspw. den Fig. 1 zu entnehmen ist, kann der Befestigungsclip 1 einen Einführraum 6 zum Einführen eines Bauteils auf einer der Montageseite 20 abgewandten Seite 21 des Basisstegs 2 über eine Einführöffnung 60 des Einführraums 6 aufweisen. Als Bauteil kommen hier bspw. Befestigungsmittel, wie eine Schraube oder ein Bolzen, oder auch eine Indikatorlampe, wie bspw. einer Indikator-LED, und dergleichen mehr in Betracht.

Der Befestigungsclip 1 kann des Weiteren ein Paar von Schnapphaken 3 aufweisen, welche sich jeweils mit einem Stegabschnitt 30 von der Montageseite 20 weg erstrecken, wie dies insbesondere den Fig. 1-5, 7, 9 und 10 zu entnehmen ist.

Wie allen Figuren zu entnehmen ist, weist jeder der Stegabschnitte 30 von der Montageseite 20 beabstandet einen Rastvorsprung 31 auf. Die Rastvorsprünge 31 sind aufeinander zu gerichtet und jeweils durch eine der Montageseite 20 zugewandte Rastseite 32 gebildet, um zwischen den Rastseiten 32 einerseits und der Montageseite 20 andererseits einen Montageraum M beidseits zu begrenzen, wie dies insbesondere in den Fig. 1-4 verdeutlicht ist.

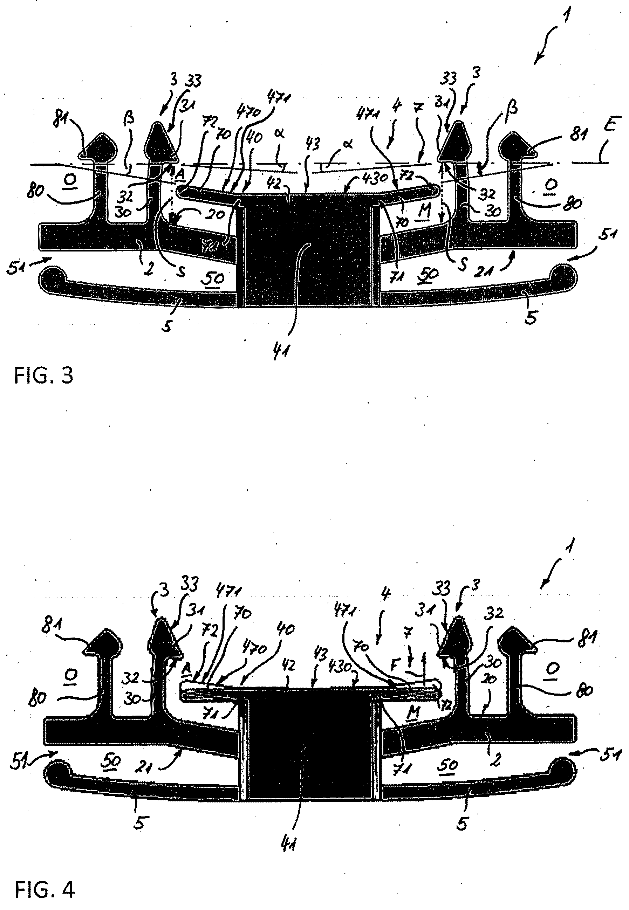

Wie insbesondere Fig. 3 und 4 sowie 7 und 8 zu entnehmen ist, können die Stegabschnitte 30 bevorzugt von dem Montageraum M weg konvex nach außen gewölbt sein.

Die Schnapphaken 3 sind bevorzugt derart ausgebildet, dass sie - bspw. über ihre Stegabschnitte 30 - elastisch nach außen und voneinander weg auslenkbar sind, um so die Rastvorsprünge 31 voneinander weg zu bewegen und folglich eine Rastverbindung wahlweise freizugeben.

Der Befestigungsclip 1 kann bevorzugt ferner wenigstens einen und hier zwei Kabelhalterstege 5 aufweisen, welche jeweils zusammen mit dem Basissteg 2 auf einer dem Montageraum M abgewandten Seite einen Kabelaufnahmeraum 50 zum Durchführen von Kabeln (nicht gezeigt) begrenzen, wobei der Kabelhaltersteg 5 vorzugsweise federnd gelagert ist, um wahlweise eine seitliche Aufnahmeöffnung 51 zum Einlegen von Kabeln zu vergrößern.

Der Befestigungsclip 1 weist ferner einen Auflageabschnitt 4 auf, welcher in dem Montageraum M angeordnet ist, wie dies insbesondere den Fig. 3 und 4 zu entnehmen ist.

Der Auflageabschnitt 4 weist eine Auflageseite 40 auf, welche von der Montageseite 20 abgewandt ist, um zwischen der Auflageseite 40 und den Rastseiten 32 einen Aufnahmeraum A zur rastenden Aufnahme einer Leuchtengruppe L zu begrenzen.

An ihren distalen - also von der Montageseite 20 abgewandten - Ende weisen die Schnapphaken 3 bzw. deren Rastvorsprünge 31 auf einer den Rastseiten 32 abgewandten Seite eine Einführschräge 33 auf, welche hier zu dem Montageraum 20 zuläuft. Somit kann das Einführen der Leuchtengruppe L in den Aufnahmeraum A erleichtert werden.

Der Auflageabschnitt 4 kann bevorzugt einen Träger 41 aufweisen, welcher sich - hier bevorzugt zwischen den Stegabschnitten 30 - von der Montageseite 20 weg in den Montageraum M hinein bis zu einem distalen Ende 42 hin erstreckt. Das distale Ende 42 bzw. eine distale Stirnseite 43 des distalen Endes 42 weist dabei, wie hier dargestellt und bspw. aus den Fig. 3 und 4 ersichtlich ist, bevorzugt einen Teil 420 der Auflageseite 40 auf.

Der Auflageabschnitt 4 weist ferner einen Federabschnitt 7 auf, der wenigstens einen (bevorzugt wenigstens teilweise oder, wie dargestellt, vollständig anderen) Teil 470 der Auflageseite 40 aufweist.

Der Federabschnitt 7 kann bevorzugt auf Seiten des distalen Endes 42 des Trägers 41 vorgesehen sein.

Der Federabschnitt 7 ist bevorzugt derart ausgebildet, sodass er zwischen einer Ruheposition (vgl. Fig. 1-6), in der der Federabschnitt 7 entspannt in dem Montageraum M angeordnet ist, sowie einer Vorspannposition bzw. Betriebsposition (vgl. Fig. 4 und 7-10), in der der Federabschnitt 7 wenigstens mit dem (also seinem) Teil 470 der Auflageseite 40 gegenüber der Ruheposition zu der Montageseite 20 hin derart versetzt ist, sodass der Federabschnitt 7 mit einer Federkraft F von der Montageseite 20 weg und zu den Rastseiten 32 hin vorgespannt ist.

Die Rastseiten 32 können bevorzugt mit zunehmenden Abstand vom zugehörigen Stegabschnitt 30 zu der Montageseite 20 hin geneigt sein, wie dies insbesondere den Darstellungen der Fig. 3, 4, 6 und 8 zu entnehmen ist. Die Rastseiten 32 können dabei bezüglich einer die Rastvorsprünge 31 verbindenden Ebene E in einer Ruheposition der Schnapphaken 3 um einen Winkel α von 3° ≤ α ≤ 10 ° zu der Montageseite 20 hin geneigt sein, wie dies beispielhaft in Fig. 3 gezeigt ist.

Der Federabschnitt 7 kann bevorzugt zwei flügelartige Federarme 70 aufweisen, welche jeweils wenigstens einen Teil 471 der Auflageseite 40 aufweisen, wie dies insbesondere den Fig. 2-4 zu entnehmen ist.

Die Federarme 70 erstrecken sich bevorzugt seitlich von dem Träger 41 voneinander weg; dies besonders bevorzugt quer zu einer Erstreckung der Stegabschnitte 30, wie dies insbesondere den Fig. 3 und 4 zu entnehmen ist. Dabei können sich die Federarme 70 bevorzugt von gegenüberliegenden Seiten des Trägers 41 jeweils ausgehend von einem proximalen Endabschnitt 71 voneinander weg erstrecken; bevorzugt bis zu einem jeweiligen distalen Endabschnitt 72, wie dies ebenfalls den Fig. 3 und 4 zu entnehmen ist.

Die Federarme 70 erstrecken sich bevorzugt zu jeweils einem anderen der aufeinander zu gerichteten Rastvorsprünge 31 hin zu einem bzw. dem jeweiligen distalen Endabschnitt 72, wie ebenso den Fig. 3 und 4 besonders gut zu entnehmen ist.

Der Teil 471 der Auflageseite 40 der jeweiligen Federarme 70 ist bevorzugt jeweils teilweise zwischen dem jeweiligen proximalen Endabschnitt 71 und dem jeweiligen distalen Endabschnitt 72 vorgesehen, wie ebenso den Fig. 3 und 4 gut zu entnehmen ist.

Der distale Endabschnitt 72 des der jeweiligen Rastseite 32 zugewandten Federarms 70 kann bevorzugt, wenigstens in der Ruheposition des Federabschnitts 7, bzgl. einer die Montageseite M und die jeweilige Rastseite 32 verbindenden Strecke S, dieser Rastseite 32 näher liegen als der proximale Endabschnitt 71 dieses Federarms 70, wie bspw. der Fig. 3 zu entnehmen ist.

Die Federarme 70 sind bevorzugt zu ihrem jeweiligen distalen Endabschnitt 72 hin von der Montageseite 20 weg gebogen und/oder weg geneigt, wie insbesondere ebenfalls den Fig. 3 und 4 zu entnehmen ist.

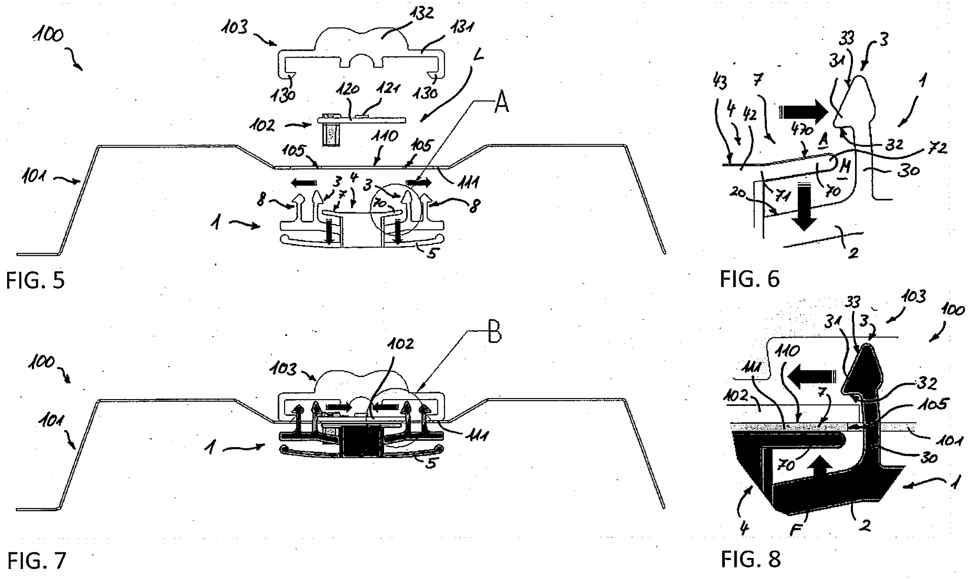

Der Teil 471 der Auflageseite 40 der jeweiligen Federarme 70 kann bevorzugt an dem jeweiligen distalen Endabschnitt 72 bzgl. einer (bzw. der) die Rastvorsprünge 31 verbindenden Ebene E in der Ruheposition der Federarme 70 um einen Winkel β von 3° ≤ β ≤ 20° zu der zugeordneten Rastseite 32 hin geneigt sein, wie dies bspw. aus den Fig. 3 und 6 zu entnehmen ist.

Die Montageseite 20 kann bevorzugt zwischen den Stegabschnitten 30 mit zunehmendem Abstand von den jeweiligen Stegabschnitten 30 aufeinander zu - vorzugsweise bis zu dem Träger 41, wenn dieser vorhanden ist - von den Rastseiten 32 weg geneigt und/oder gewölbt verlaufen, wie dies ebenso beispielhaft den Fig. 3 und 4 zu entnehmen ist.

Wie allen Figuren zu entnehmen ist, kann der Befestigungsclip 1 ferner ein zweites Paar von Schnapphaken 8 aufweisen, welches sich jeweils mit einem weiteren Stegabschnitt 80 von der Montageseite 20 weg erstrecken. Die Stegabschnitte 30 sind dabei zwischen den weiteren Stegabschnitten 80 angeordnet. Jeder der weiteren Stegabschnitte 80 weist dabei von der Montageseite 20 beabstandet einen weiteren Rastvorsprung 81 auf. Die weiteren Rastvorsprünge 81 sind dabei voneinander weg gerichtet, um jeweils einen seitlich nach außen von dem Montageraum M weg gerichteten weiteren Montageraum O zu bilden, um gemeinsam eine den Aufnahmeraum A überspannende Optik 103 aufzunehmen, wie dies beispielhaft in den Fig. 7, 9 und 10 gezeigt ist.

Der Befestigungsclip 1 kann bevorzugt integral einstückig ausgebildet sein, wie allen Figuren zu entnehmen ist. Der Befestigungsclip kann bevorzugt aus einem Kunststoff hergestellt sein, vorzugsweise aus Polycarbonat (PC), Polymethylmethacrylat (PMMA), Polyethylenterephthalat-Glykol (PET-G), Acrylonitril-Butadien-Styrol (ABS), Polyphenylenoxid (PPO), Polyamid (PA) wie bspw. PA6 oder PA66, Polyethersulfon (PESU), oder einer Kombination derselben. Der Befestigungsclip 1 kann bevorzugt mittels eines Spritzgussverfahrens hergestellt sein.

Mit Verweis auf die Fig. 5-10 wird nun eine Leuchte 100 gemäß der vorliegenden Erfindung beschrieben. Bevorzugt betrifft die vorliegende Erfindung eine längliche Leuchte 100. Die Leuchte 100 weist dabei einen (bevorzugt länglichen) Leuchtenträger 101 auf. Ferner weist die Leuchte 100 ein längliches Leuchtmittel 102, wie hier insbesondere ein längliches LED-Modul, auf, welches an einer Trägerseite 110 eines Tragteils 111 des Leuchtenträgers 101 anliegt. Ein solches LED-Modul 102 weist bevorzugt eine Leiterplatte 120 auf, auf der wenigstens ein oder mehrere LED-Chips 121 zur Lichtabgabe vorgesehen sind.

Die Leuchte 100 weist des Weiteren den erfindungsgemäßen Befestigungsclip 1 auf. Dieser Befestigungsclip 1 ist dabei derart vorgesehen, sodass der Tragteil 111 und das Leuchtmittel 102 als Leuchtengruppe L wenigstens teilweise in dem Aufnahmeraum A derart mittels des Paares von Schnapphaken 3 rastend aufgenommen sind, sodass der Tragteil 111 der Montageseite 20 zugewandt ist und das Leuchtmittel 102 den Rastseiten 32 zugewandt ist, und sodass die Leuchtengruppe L auf der Auflageseite 4 derart aufliegt, sodass mittels der Federkraft F des sich so in der Vorspann- bzw. Betriebsposition befindlichen Federabschnitts 7 die Leuchtengruppe L gegenüber den Rastseiten 32 in Anlage gehalten wird und das Leuchtmittel 102 und das Tragteil 111 so gegeneinander gedrückt werden, wie dies insbesondere aus den Darstellungen der Fig. 7-10 ersichtlich ist.

Das längliche Leuchtmittel 102 erstreckt sich bevorzugt entlang einer Längsachse, welche in den Fig. 5, 7, 9 und 10 senkrecht zur Zeichenebene steht. Insbesondere ist das längliche Leuchtmittel 102 derart mittels des Befestigungsclips 1 rastend aufgenommen, so dass dessen Längsachse senkrecht zu einer die Schnapphaken 3 oder deren Rastvorsprünge 31 verbindenden Strecke (nicht dargestellt) ausgerichtet ist.

Das Paar von Schnapphaken 3 kann, wie hier beispielhaft dargestellt, mit seinen jeweiligen Stegabschnitten 30 durch jeweilige Öffnungen 105 in dem Leuchtenträger 101 ragen. Ebenso kann auch, wenn vorhanden, das zweite Paar von Schnapphaken 8 mit seinen weiteren Stegabschnitten 80 durch die oder weitere jeweilige Öffnungen 105 in dem Leuchtenträger 101 ragen. Dies ist insbesondere in der Zusammenschau der Fig. 5 und 7 verdeutlicht.

Wie insbesondere den Fig. 5, 7, 9 und 10 zu entnehmen ist, kann die Leuchte 100 bevorzugt ferner eine Optik 103 aufweisen. Die Optik 103 ist dabei derart ausgebildet, sodass sie mit gegenüberliegenden Halteabschnitten 130 jeweils mit einem anderen der beiden weiteren Rastvorsprünge 81 derart rastend verbindbar ist, sodass die Optik 103 das Leuchtmittel 102 oder den Aufnahmeraum A derart mit einem Optikabschnitt 130 überspannt, um wenigstens teilweise in einem Lichtpfad des Leuchtmittels 102 angeordnet zu sein.

Der Optikabschnitt 131 weist bevorzugt einen im Wesentlichen U-förmigem Querschnitt auf, wie dies aus den Fig. 5, 7, 9 und 10 ersichtlich ist.

An den gegenüberliegenden Endabschnitten des Optikabschnitts 131 erstrecken sich jeweils die Halteabschnitte 130 aufeinander zu, wie dies ebenso aus den Fig. 5, 7, 9 und 10 ersichtlich ist.

Der Optikabschnitt 131 weist bevorzugt einen lichtbeeinflussenden Abschnitt 132 auf, welcher in dem Lichtpfad des Leuchtmittels 102 angeordnet ist. Der lichtbeeinflussenden Abschnitt 132 kann vorzugsweise eine Linse und/oder einen Diffusor aufweisen. In den Fig. 5, 7, 9 und 10 ist der lichtbeeinflussende Bereich 132 beispielhaft als Linse ausgebildet.

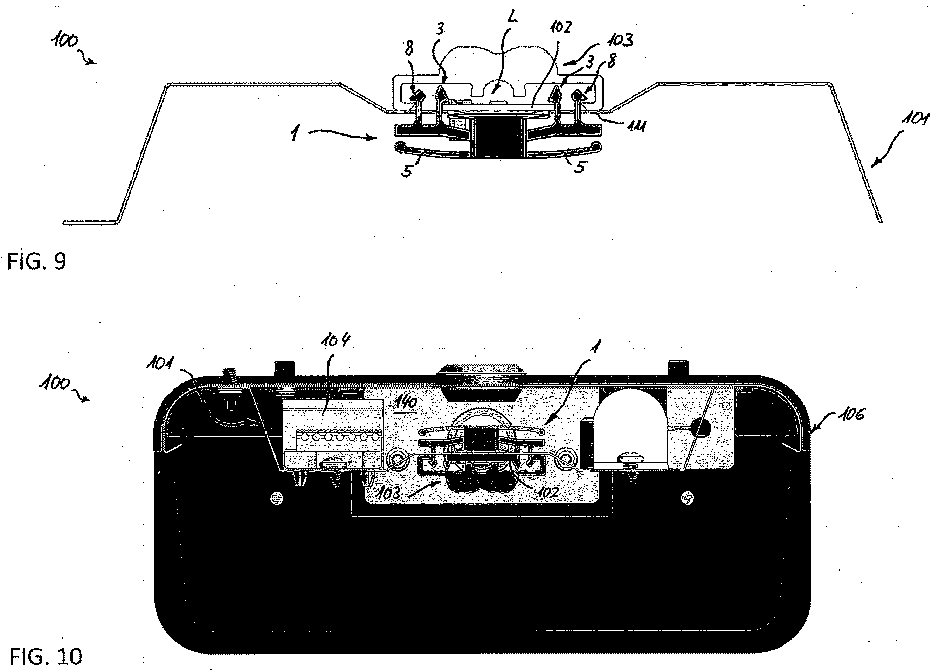

Die Leuchte 100 kann bevorzugt ferner Leuchtenkomponenten 104, wie einen Leuchtentreiber, aufweisen, wie bspw. der Fig. 10 zu entnehmen ist. Die Leuchtenkomponenten 104 können bevorzugt mit dem Befestigungsclip 1 verbunden sein; dies bevorzugt über ein mit dem Befestigungsclip 1 verbundenes Befestigungsmittel mittels Formschluss (nicht gezeigt). Hierzu kann bspw. der Einführraum 6 genutzt werden.

Der Leuchtenträger 101 kann bevorzugt alleine oder zusammen mit einem Gehäuseteil 106 (vgl. Fig. 10) wenigstens teilweise einen Komponentenaufnahmeraum 140 zur Aufnahme von (den) Leuchtenkomponenten 104 begrenzen.

Die vorliegende Erfindung ist durch die zuvor beschriebenen Ausführungsbeispiele nicht beschränkt, sofern sie vom Gegenstand der folgenden Ansprüche umfasst ist. Die Merkmale der vorbeschriebenen Ausführungsbeispiele sind in beliebiger Weise miteinander kombinierbar und untereinander austauschbar.

## Patentansprüche

1. Befestigungsclip (1) für eine Leuchte (100), aufweisend:
einen Basissteg (2) mit einer Montageseite (20),
ein Paar von Schnapphaken (3), welche sich jeweils mit einem Stegabschnitt (30) von der Montageseite (20) weg erstrecken,
wobei jeder der Stegabschnitte (30) von der Montageseite (20) beabstandet einen Rastvorsprung (31) aufweist,
wobei die Rastvorsprünge (31) aufeinander zu gerichtet und jeweils durch eine der Montageseite (20) zugewandte Rastseite (32) gebildet sind, um zwischen den Rastseiten (32) einerseits und der Montageseite (20) andererseits einen Montageraum (M) beidseits zu begrenzen,
wobei der Befestigungsclip (1) ferner einen Auflageabschnitt (4) aufweist, welcher in dem Montageraum (M) angeordnet ist,
wobei der Auflageabschnitt (4) eine Auflageseite (40) aufweist, welche von der Montageseite (20) abgewandt ist, um zwischen der Auflageseite (40) und den Rastseiten (32) einen Aufnahmeraum (A) zur rastenden Aufnahme einer Leuchtengruppe (L) zu begrenzen,
wobei der Auflageabschnitt (4) einen Federabschnitt (7) aufweist, der wenigstens einen Teil (470) der Auflageseite (40) aufweist,
wobei der Federabschnitt (7) derart ausgebildet ist, so dass er zwischen einer Ruheposition, in der der Federabschnitt (7) entspannt in dem Montageraum (M) angeordnet ist, sowie einer Vorspannposition, in der der Federabschnitt (7) wenigstens mit dem Teil (470) der Auflageseite (40) gegenüber der Ruheposition zu der Montageseite (20) hin derart versetzt ist, so dass der Federabschnitt (7) mit einer Federkraft (F) von der Montageseite (20) weg und zu den Rastseiten (32) hin vorgespannt ist.

2. Befestigungsclip (1) nach dem vorhergehenden Anspruch, wobei der Auflageabschnitt (4) einen Träger (41) aufweist, welcher sich von der Montageseite (20) weg in den Montageraum (M) hinein bis zu einem distalen Ende (42) hin erstreckt, wobei eine distale Stirnseite (43) des distalen Endes (42) bevorzugt einen Teil (430) der Auflageseite (40) aufweist,
wobei vorzugsweise der Federabschnitt (7) auf Seiten des distalen Endes (42) des Trägers (41) vorgesehen ist.

3. Befestigungsclip (1) nach einem der vorhergehenden Ansprüche, wobei der Federabschnitt (7) zwei flügelartige Federarme (70) aufweist, welche jeweils wenigstens einen Teil (471) der Auflageseite (40) aufweisen.

4. Befestigungsclip (1) nach **den beiden** vorhergehenden Ansprüchen, wobei die Federarme (70) sich seitlich von dem Träger (41) voneinander weg erstrecken, besonders bevorzugt quer zu einer Erstreckung der Stegabschnitte (30),
wobei vorzugsweise die Federarme (70) sich von gegenüberliegenden Seiten des Trägers (41) jeweils ausgehend von einem proximalen Endabschnitt (71) voneinander weg erstrecken.

5. Befestigungsclip (1) nach einem der **beiden** vorhergehenden Ansprüche, wobei die Federarme (70) sich zu jeweils einem anderen der aufeinander zu gerichteten Rastvorsprünge (31) hin zu einem jeweiligen distalen Endabschnitt (72) erstrecken.
wobei vorzugsweise die Federarme (70) zu ihrem jeweiligen distalen Endabschnitt (72) hin von der Montageseite (20) weggebogen und/oder weggeneigt sind,
wobei vorzugsweise der Teil (471) der Auflageseite (40) der jeweiligen Federarme (70) an dem jeweiligen distalen Endabschnitt (72) bezüglich einer die Rastvorsprünge (31) verbindenden Ebene (E) in der Ruheposition der Federarme (70) um einen Winkel β von 3° ≤ β ≤ 20° zu der zugeordneten Rastseite (32) hin geneigt sind.

6. Befestigungsclip (1) nach **den beiden** vorhergehenden Ansprüchen,
wobei der Teil (471) der Auflageseite (40) der jeweiligen Federarme (70) wenigstens teilweise zwischen dem jeweiligen proximalen Endabschnitt (71) und dem jeweiligen distalen Endabschnitt (72) vorgesehen ist,
und/oder
wobei wenigstens in der Ruheposition des Federabschnitts (7), bezüglich einer die Montageseite (20) und die jeweilige Rastseite (32) verbinden Strecke (S), der distale Endabschnitt (72) des der jeweiligen Rastseite (32) zugewandten Federarms (70) dieser Rastseite (32) näherliegt als der proximale Endabschnitt (71) dieses Federarms (70).

7. Befestigungsclip (1) nach einem der vorhergehenden Ansprüche,
wobei die Stegabschnitte (30) von dem Montageraum (M) weg konvex nach außen gewölbt sind,
und/oder
wobei die Rastseiten (32) mit zunehmendem Abstand vom jeweiligen Stegabschnitt (30) zu der Montageseite (20) hin geneigt sind,
wobei vorzugsweise die Rastseiten (32) bezüglich einer die Rastvorsprünge (31) verbindenden Ebene (E) in einer Ruheposition der Schnapphaken (3) um einen Winkel α von 3° ≤ α ≤ 10° zu der Montageseite (20) hin geneigt sind,
und/oder
wobei die Montageseite (20) zwischen den Stegabschnitten (30) mit zunehmendem Abstand von den jeweiligen Stegabschnitten (30) aufeinander zu, vorzugsweise bis zu dem Träger (41) wenn vorhanden, von den Rastseiten (32) weg geneigt und/oder gewölbt verläuft.

8. Befestigungsclip (1) nach einem der vorhergehenden Ansprüche, ferner aufweisend ein zweites Paar von Schnapphaken (8), welche sich jeweils mit einem weiteren Stegabschnitt (80) von der Montageseite (20) weg erstrecken, wobei die Stegabschnitte (30) zwischen den weiteren Stegabschnitten (80) angeordnet sind,
wobei jeder der weiteren Stegabschnitte (80) von der Montageseite (20) beabstandet einen weiteren Rastvorsprung (81) aufweist,
wobei die weiteren Rastvorsprünge (81) voneinander weg gerichtet sind, um jeweils einen seitlich nach außen von dem Montageraum (M) weg gerichteten weiteren Montageraum (O) zu bilden, um gemeinsam eine den Aufnahmeraum (A) überspannenden Optik (103) aufzunehmen.

9. Befestigungsclip (1) nach einem der vorhergehenden Ansprüche, ferner aufweisend einen Einführraum (6) zum Einführen eines Bauteils, wie einer Indikatorlampe oder eines Befestigungsmittels, bspw. eine Schraube oder ein Bolzen, auf einer der Montageseite (20) abgewandten Seite (21) des Basisstegs (2) über eine Einführöffnung (60) des Einführraums (6).

10. Befestigungsclip (1) nach einem der vorhergehenden Ansprüche, ferner aufweisend wenigstens einen Kabelhaltersteg (5), welcher zusammen mit dem Basissteg (2) auf einer dem Montageraum (M) abgewandten Seite einen Kabelaufnahmeraum (50) zum Durchführen von Kabeln begrenzt, wobei der Kabelhaltersteg (5) vorzugsweise federnd gelagert ist, um wahlweise eine seitliche Aufnahmeöffnung (51) zum Einlegen von Kabeln zu vergrößern.

11. Befestigungsclip (1) nach einem der vorhergehenden Ansprüche,
wobei der Befestigungsclip (1) integral einstückig ausgebildet ist, und/oder
wobei der Befestigungsclip (1) aus Kunststoff hergestellt ist, vorzugsweise aus Polycarbonat (PC), Polymethylmethacrylat (PMMA), Polyethylenterephthalat-Glykol (PET-G), Acrylonitril-Butadien-Styrol (ABS), Polyphenylenoxid (PPO), Polyamid (PA) wie bspw. PA6 oder PA66, Polyethersulfon (PESU), oder einer Kombination derselben, und/oder
wobei der Befestigungsclip (1) mittels Spritzgussverfahren hergestellt ist.

12. Leuchte (100), aufweisend
einen Leuchtenträger (101),
ein längliches Leuchtmittel (102), wie ein längliches LED-Modul, welches an einer Trägerseite (110) eines Tragteils (111) des Leuchtenträgers (101) anliegt,
einen Befestigungsclip (1) nach einem der vorhergehenden Ansprüche,
wobei der Befestigungsclip (1) derart vorgesehen ist, so dass der Tragteil (111) und das Leuchtmittel (102) als Leuchtengruppe (L) wenigstens teilweise in dem Aufnahmeraum (A) derart mittels des Paares von Schnapphaken (3) rastend aufgenommen sind, so dass
• der Tragteil (111) der Montageseite (20) zugewandt ist und das Leuchtmittel (102) den Rastseiten (32) zugewandt ist, und
• die Leuchtengruppe (L) auf der Auflageseite (40) derart aufliegt, so dass mittels der Federkraft (F) des sich in der Vorspannposition befindlichen Federabschnitts (7) die Leuchtengruppe (L) gegenüber den Rastseiten (32) in Anlage gehalten wird und das Leuchtmittel (102) und das Tragteil (111) gegeneinander gedrückt werden.

13. Leuchte (100) nach **dem** vorhergehenden Anspruch, wobei das Paar von Schnapphaken (3) mit seinen jeweiligen Stegabschnitten (30) und, wenn vorhanden, vorzugsweise auch das zweite Paar von Schnapphaken (8) mit seinen weiteren Stegabschnitten (80) durch jeweilige Öffnungen (105) in dem Leuchtenträger (101) ragt.

14. Leuchte (100) nach einem der **beiden** vorhergehenden Ansprüche, ferner aufweisend eine Optik (103), wobei die Optik (103) derart ausgebildet ist, so dass sie mit gegenüberliegenden Halteabschnitten (130) jeweils mit einem anderen der beiden weiteren Rastvorsprünge (81) derart rastend verbindbar ist, so dass die Optik (103) das Leuchtmittel (102) oder den Aufnahmeraum (A) derart mit einem Optikabschnitt (131) überspannt, um wenigstens teilweise in einem Lichtpfad des Leuchtmittels (102) angeordnet zu sein,
wobei vorzugsweise der Optikabschnitt (131) einen im Wesentlichen U-förmigem Querschnitt aufweist, und/oder
wobei vorzugsweise sich an den gegenüberliegenden Endabschnitten des Optikabschnitts (131) jeweils die Halteabschnitte (130) aufeinander zu erstrecken, und/oder
wobei vorzugsweise der Optikabschnitt (131) einen lichtbeeinflussenden Abschnitt (132), welcher in dem Lichtpfad des Leuchtmittels (102) angeordnet ist, wobei der lichtbeeinflussende Abschnitt (132) weiter vorzugsweise eine Linse und/oder einen Diffusor aufweist.

15. Leuchte (100) nach einem der **drei** vorhergehenden Ansprüche, ferner aufweisend Leuchtenkomponenten (104), wie einen Leuchtentreiber, welche mit dem Befestigungsclip (1) verbunden sind, vorzugsweise über ein mit dem Befestigungsclip (1) verbundenes Befestigungsmittel (S) mittels Formschluss,
und/oder
wobei der Leuchtenträger (101) alleine oder zusammen mit einem Gehäuseteil (106) wenigstens teilweise einen Komponentenaufnahmeraum (140) zur Aufnahme von (den) Leuchtenkomponenten (104) begrenzt.
